# EUROPÄISCHE PATENTSCHRIFT

(11) **EP 0 856 693 B1**
(45) Veröffentlichungstag und Bekanntmachung des Hinweises auf die Patenterteilung: **19.09.2001**
(21) Anmeldenummer: 98100596.0
(22) Anmeldetag: 15.01.1998
(51) Int. Cl.: F16K 47/02

(54) **Sanitäres Wasserventil**
Sanitary water tap
Robinet d'eau sanitaire

(30) Priorität: 04.02.1997 DE 19704068
(43) Veröffentlichungstag der Anmeldung: 05.08.1998
(73) Patentinhaber: Friedrich Grohe AG & Co. KG, 58675 Hemer (DE)
(72) Erfinder: Pawelzik, Manfred, 59494 Soest (DE); Gebhardt, Wolfgang, 58706 Menden (DE)

(56) Entgegenhaltungen:
- EP-A- 0 182 268
- EP-A- 0 433 781
- DE-A- 2 937 475
- DE-U- 8 800 295
- FR-A- 2 568 658
- FR-A- 2 602 024

## Beschreibung

Die Erfindung betrifft ein sanitäres Wassermisch- und Absperrventil mit einer Festscheibe, die mindestens eine kreisringausschnittförmige Kalt- und Warmwassereinlaßöffnung enthält, und mit einer zur Festscheibe beweglich angeordneten Steuerscheibe, die wenigstens eine als Durchbruch ausgebildete Überströmöffnung hat und die von einer eine Höhlung als Überströmkanal aufweisende Abdeckscheibe an der von der Festscheibe abgekehrten Stirnseite begrenzt ist, wobei die mit den Einlaßöffnungen der Festscheibe zusammenwirkende Steuerkante im Durchbruch eine Verzahnung zur Fließgeräuschminderung trägt.

Ein derartiges Ventil ist aus der Druckschrift EP 0 182 268 B1 bekannt. Derartige Ventile werden in der Regel in einem Kartuschengehäuse ausgebildet, wobei die als Baueinheit ausgebildete Ventilkartusche in Sanitärarmaturenkörpern mit Zu- und Abflußkanälen für das zufließende und abgehende Wasser eingesetzt werden. Hierbei wird meist angestrebt, die Ventilkartusche möglichst schlank zu gestalten, so daß auch der Sanitärarmaturenkörper schlank und in einer ästhetisch ansprechenden Form gehalten werden kann.
Bei einer im Durchmesser verkleinerten Ventilkartusche wird in der Regel das Fließgeräuschverhalten, z. B. durch ungünstigere Umlenkungen, erhöhte Fließgeschwindigkeit etc., ungünstiger. Mit der vorbekannten Einrichtung können die Vorschriften bezüglich der maximalen Fließgeräuschentwicklung im Ventil gut erfüllt werden. Bei im Durchmesser verkleinerten Mischventilkartuschen kann es jedoch unter ungünstigen Umständen zu einer unzulässig hohen Fließgeräuschentwicklung kommen.

Der Erfindung liegt die Aufgabe zugrunde, bei dem im Oberbegriff des Anspruchs 1 angegebenen Ventil die Maßnahmen zur Fließgeräuschminderung zu verbessern, so daß auch bei im Durchmesser verkleinerten Mischventilkartuschen der vorgeschriebene Fließgeräuschgrenzwert weitgehend eingehalten werden kann.

Diese Aufgabe wird erfindungsgemäß dadurch gelöst, daß die Steuerkante von einem Kreisbogen von wenigstens 180° gebildet ist, dessen Radius kleiner als der Radius der Innenkante der Einlaßöffnungen ist, und die Zähne nach Art einer Zahnradinnenverzahnung ausgebildet sind, wobei die Zähne zu beiden Seiten einer Symmetrieachse mit zunehmendem Abstand zunehmend verkürzt ausgebildet sind.
Weitere Ausgestaltungen der Erfindung sind in den Ansprüchen 2 bis 11 angegeben.

Mit den vorgeschlagenen Maßnahmen wird insbesondere erreicht, daß im Öffnungs- und Absperrbereich die einzelnen Zahnlücken nacheinander in Öffnungs- oder Schließstellung gelangen, während in der voll geöffneten Stellung mit den in den beiden Randbereichen verkürzten Zähne ein größerer Durchflußquerschnitt erreichbar ist.

In weiterer Ausgestaltung kann zusätzlich der Boden der Abdeckscheibe zur Begrenzung des Überströmkanals mit einem Siebgeflecht versehen sein, welches zweckmäßig in die Höhlung der Abdeckscheibe eingepresst wird, derart, daß es durch Reibschluß auf dem Boden in der Stecklage verharrt.
Alternativ kann auch der Boden der Abdeckscheibe oberhalb des Überströmkanals mit einer reliefartigen Struktur versehen sein, die von der Anströmseite etwa einem Siebgeflecht entspricht. Hierbei kann die reliefartige Struktur kostengünstig in einem Arbeitsgang mit der Herstellung der vorteilhaft aus Kunststoff bestehenden Abdeckscheibe eingebracht werden.

Ein Ausführungsbeispiel der Erfindung ist in der Zeichnung dargestellt und wird im folgenden näher beschrieben. Es zeigt
- Fig. 1: eine Ventilkartusche zur Wassermischung und Durchflußmengenregulierung im Längsschnitt in voll geöffneter Durchflußstellung;
- Fig. 2: einen Teil des in Fig. 1 gezeigten Ventils in der Absperrstellung;
- Fig. 3: die in Fig. 1 und 2 gezeigte Steuerscheibe in Draufsicht;
- Fig. 4: die in Fig. 1 und 2 gezeigte Festscheibe in Draufsicht;
- Fig. 5: eine Paarung der in Fig. 3 gezeigten Steuerscheibe mit der in Fig. 4 gezeigten Festscheibe in vergrößerter Darstellung, wobei von der Steuerscheibe der Durchfluß gerade von den Zahnlücken der in der Steuerkante ausgebildeten Verzahnung freigegeben wird;
- Fig. 6: die in Fig. 5 gezeigte Ventilscheibenpaarung, wobei die Steuerscheibe sich in der voll geöffneten Position zur Festscheibe befindet;
- Fig. 7: eine alternative Ausgestaltung des Bodens der Abdeckscheibe in vergrößerter Darstellung, wobei in der Oberfläche die Struktur eines Siebgeflechtes eingeformt ist.

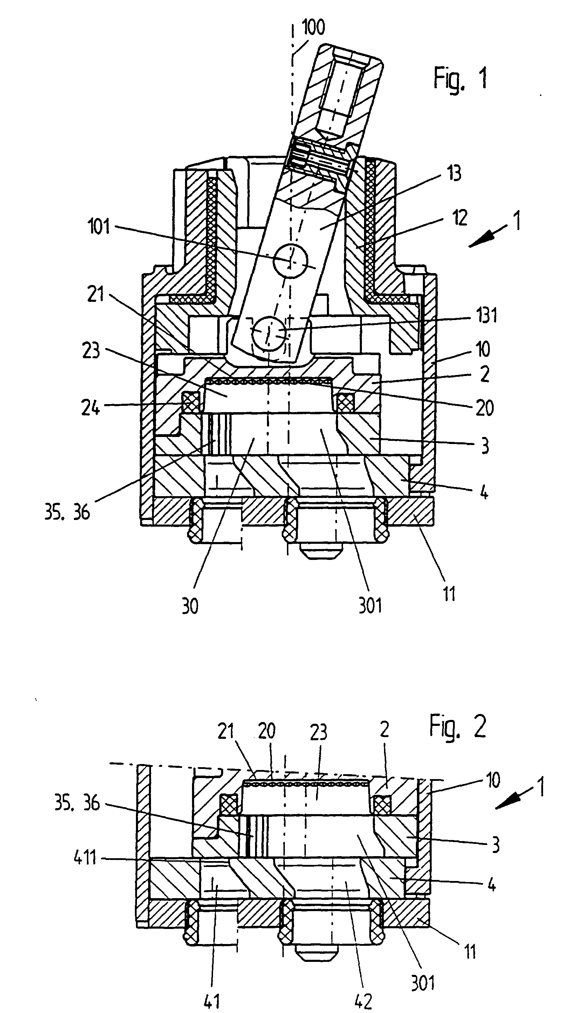

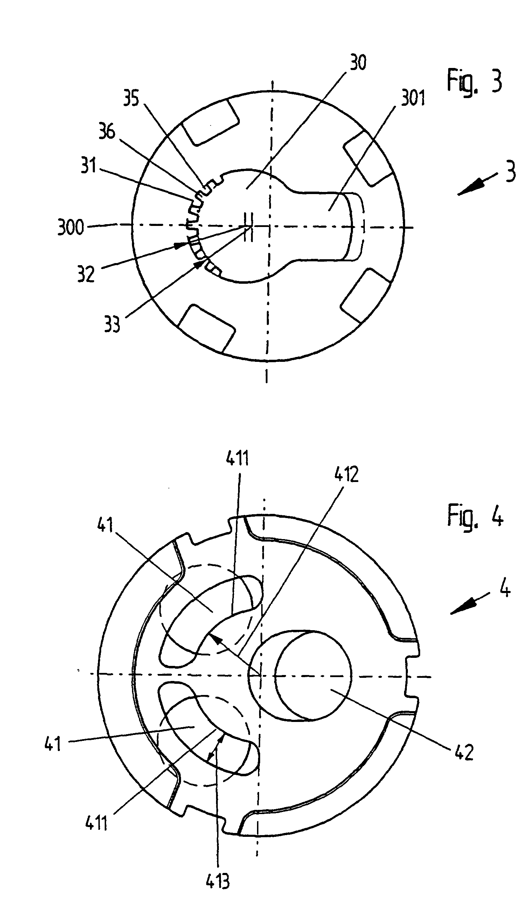

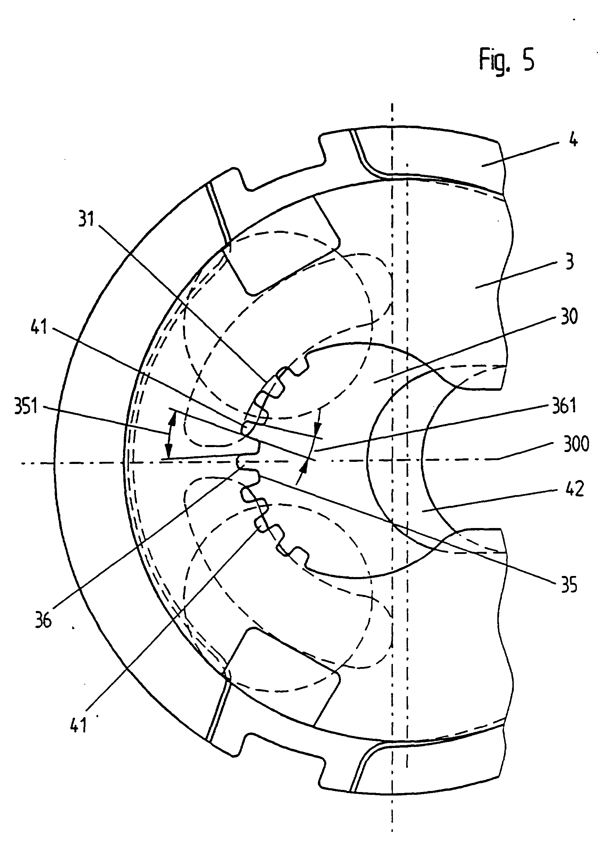

Die in Fig. 1 dargestellte Ventilkartusche 1 ist für den Einsatz in Sanitärarmaturen vorgesehen. Die Ventilkartusche 1 wird dabei in einer Aufnahme des Armaturenkörpers - in der Zeichnung nicht dargestellt - eingesetzt, wobei im Armaturenkörper die Kanäle für das zufließende Kalt- und Warmwasser sowie für das von der Ventilkartusche 1 abgegebene Wasser ausgebildet sind.
Die Ventilkartusche 1 wird von einer Hülse 10 mit einem Hülsenboden 11 gebildet, wobei in einem durchmesserverkleinerten Bereich eine zur Mittelachse 100 verdrehbare Drehhülse 12 und in der Drehhülse 12 ein um eine senkrecht zur Mittelachse 100 angeordnete Achse 101 verschwenkbarer Stellhebel 13 angeordnet ist. An der Drehhülse 12 ist axial eine Abdeckscheibe 2 zur Abdeckung und Mitnahme einer Steuerscheibe 3 angelagert. Die Abdeckscheibe 2 ist hierbei mit einem Stift 131 drehfest und radial verschieblich an dem inneren Endbereich des Stellhebels 13 angelenkt.
An der gegenüberliegenden Stirnseite der Abdeckscheibe 2 ist die Steuerscheibe 3 mit einem Dichtring 24 gedichtet und drehfest angelagert. An der gegenüberliegenden Seite der Steuerscheibe 3 ist eine drehfest in der Hülse 10 gelagerte Festscheibe 4 angeordnet.
Die Festscheibe 4 ist hierbei kreisförmig ausgebildet, wie es insbesondere aus Fig. 4 zu entnehmen ist, und weist zwei in der linken Hälfte symmetrisch angeordnete, als Kreisringausschnitte ausgebildete Einlaßöffnungen 41 für Kalt- und Warmwasser auf. In der gegenüberliegenden Hälfte der Festscheibe 4 ist eine Auslaßöffnung 42 für Kalt-, Warm- oder Mischwasser ausgebildet. Die Steuerscheibe 3 weist, wie es insbesondere aus Fig. 3 der Zeichnung zu entnehmen ist, einen Durchbruch 30 auf, mit dem, je nach Radial- und Drehstellung, die Einlaßöffnungen 41 wahlweise mit der Auslaßöffnung 42 in Überdeckung gebracht oder voneinander getrennt werden können. Der Durchbruch 30 entspricht im Querschnitt etwa dem als Höhlung in der Abdeckscheibe 2 ausgebildeten Überströmkanal 23. Alternativ können aber auch zwei oder mehrere separate Durchbrüche in der Steuerscheibe 3 ausgebildet sein, die dann über den Überströmkanal 23 in der Höhlung der Abdeckscheibe 2 miteinander verbunden sind.
Die vorstehend dargestellte Ventilkartusche 1 hat folgende Funktionsweise:
Wird der Stellhebel 13 um die Mittelachse 100 verdreht, z. B. mit einem in der Zeichnung nicht dargestellten Handgriff, so wird das Mischungsverhältnis des in die Ventilkartusche 1 einströmenden Kalt- und Warmwasser entsprechend verändert, während die Gesamtdurchflußmenge unverändert bleibt. Wird dagegen der Stellhebel 13 um die Achse 101 verschwenkt, so wird die Steuerscheibe 3 mit der Abdeckscheibe 2 radial zur Festscheibe 4 verschoben, so daß bei einem unveränderten Mischungsverhältnis von Kalt- und Warmwasser sich die Gesamtdurchflußmenge ändert. Hierzu zeigt Fig. 1 die Steuerscheibe 3 in der voll geöffneten Stellung, während Fig. 2 die Steuerscheibe 3 in der Absperrstellung zur Festscheibe 4 zeigt.

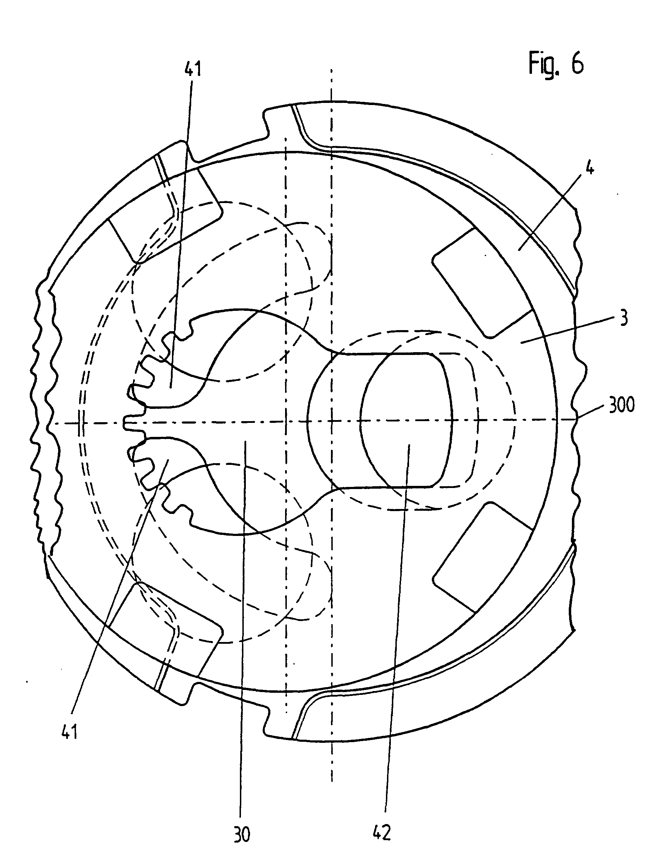

Zur Fließgeräuschminderung ist am Durchbruch 30 ein Kreisbogen als Steuerkante 31 mit einem Radius 32 von etwa 5,6 mm ausgebildet, der mit den Einlaßöffnungen 41 zusammenwirkt. Die Verbindung des Durchbruchs 30 mit der Auslaßöffnung 42 erfolgt mit einem auf einer Symmetrieachse 300 angeordneten, der Steuerkante 31 gegenüberliegendem Fortsatz 301. Der Kreisbogen der Steuerkante 31 umfaßt hierbei etwa 270°.
Zu beiden Seiten der Symmetrieachse 300 sind Zähne 35 nach Art einer Zahnradinnenverzahnung mit geradlinigen Zahnflanken ausgebildet, wobei auf der Symmetrieachse 300 eine Zahnlücke 36 angeordnet ist. Die einzelnen Zähne 35 weisen am Zahnfuß eine Dicke von etwa 1 mm auf und sind ausgehend von der Symmetrieachse fortlaufend verkürzt ausgebildet, wobei die größte Länge der Zähne etwa 1 mm beträgt. Die Verkürzung der nachfolgenden Zähne ist durch einen Kreisbogen der Zahnspitzen mit einem Radius 33 von etwa 5,3 mm festgelegt. Die Zähne 35 weisen außerdem einen Keilwinkel 351 von 23,1° auf, während die Zahnlücken 36 einen Keilwinkel 361 von 6,1° haben. Die Kanten der Zahnflanken der Zähne 35 sind am Zahnfuß und am Zahnkopf mit einem Radius von 0,1 bis 0,3 mm , vorzugsweise 0,2 mm, verrundet.
Die Einlaßöffnungen 41 sind als Kreisringausschnitte ausgebildet, wobei die Innenkante 411 einen Radius 412 von 6,6 mm aufweist. Die beiden Einlaßöffnungen 41 weisen darüber hinaus eine Breite 413 von 3,4 mm auf.
Wie es insbesondere aus Fig. 5 ersichtlich ist, ist durch die vorstehend beschriebene Ausbildung der Steuerkante 31 ein feinfühliger Öffnungs- und Absperrvorgang durch die unterschiedlichen Kreisbögen der Innenkante 411 und der Steuerkante 31 bei einer radialen Öffnungsbewegung nach links und einer radialen Absperrbewegung nach rechts geboten. Die Zahnlücken 36 gelangen nacheinander mit den Einlaßöffnungen 41 in oder außer Überdeckung, wodurch ein sanftes und geräuscharmes Öffnen und Absperren des Ventils ermöglicht wird. Durch die verkürzten Zähne 35 im Randbereich der Steuerkante 31 wird außerdem erreicht, daß in der voll geöffneten Ventilstellung möglichst große Durchflußöffnungen erzeugt werden können.

Zur weiteren Fließgeräuschminderung ist an der Abdeckscheibe am Boden 21 des Überströmkanals 23 ein Siebgeflecht 20 angeordnet. Das Siebgeflecht 20 ist aus einem einen Kreisquerschnitt aufweisenden Metall- oder Kunststoffdraht mit einem Durchmesser von 0,3 mm hergestellt, wobei das Siebgeflecht eine Maschenweite von etwa 0,5 mm hat. Das Siebgeflecht ist, wie es aus Fig. 1 und 2 zu entnehmen ist, in die Höhlung bzw. den Überströmkanal 23 gegen den Boden 21 gepresst, wobei das Siebgeflecht so dimensioniert ist, daß es in der Stecklage durch Reibschluß verharrt.

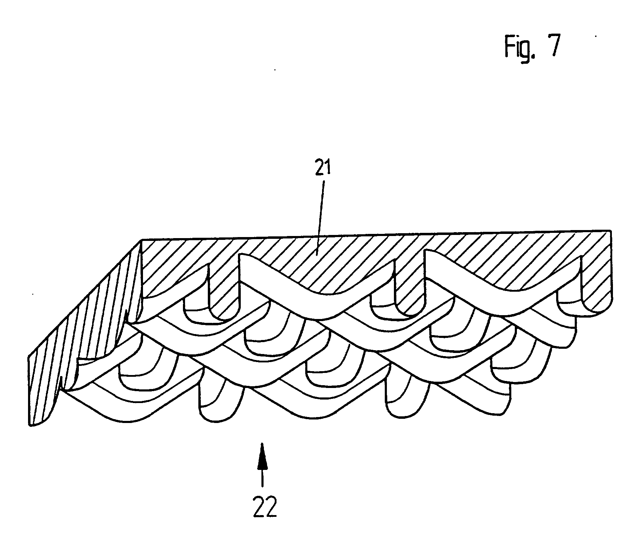

Alternativ kann anstatt des Siebgeflechts auch der Boden 21 der Abdeckscheibe 2 mit einer reliefartigen Struktur 22 versehen sein, die etwa einem Siebgeflecht von der Anströmseite entspricht, wie es insbesondere auch aus Fig. 7 der Zeichnung zu entnehmen ist. Diese reliefartige Struktur kann besonders kostengünstig bei der Herstellung der vorzugsweise im Spritzgießverfahren aus Kunststoff hergestellten Abdeckscheibe 2 in einem Formgebungsprozeß mit eingeformt werden, so daß die Herstellung und Zuschneidung eines besonderen Siebgeflechts sowie die Einmontage in die Abdeckscheibe 2 hierbei entfallen kann.

## Patentansprüche

1. Sanitäres Wassermisch- und Absperrventil mit einer Festscheibe (4), die mindestens eine kreisringausschnittförmige Kalt- und Warmwassereinlaßöffnung (41) enthält, und mit einer zur Festscheibe (4) beweglich angeordneten Steuerscheibe (3), die wenigstens eine als Durchbruch (30) ausgebildete Überströmöffnung hat und die von einer eine Höhlung als Überströmkanal (23) aufweisende Abdeckscheibe (2) an der von der Festscheibe (4) abgekehrten Stirnseite begrenzt ist, wobei die mit den Einlaßöffnungen der Festscheibe (4) zusammenwirkende Steuerkante (31) im Durchbruch (30) eine Verzahnung zur Fließgeräuschminderung trägt, **dadurch gekennzeichnet, daß** die Steuerkante (31) von einem Kreisbogen von wenigstens 180° gebildet ist, dessen Radius (32) kleiner als der Radius (412) der Innenkante (411) der Einlaßöffnungen (41) ist, und die Zähne (35) nach Art einer Zahnradinnenverzahnung ausgebildet sind, wobei die Zähne (35) zu beiden Seiten einer Symmetrieachse (300) mit zunehmendem Abstand zunehmend verkürzt ausgebildet sind.

2. Wassermisch- und Absperrventil nach Anspruch 1, **dadurch gekennzeichnet, daß** eine Zahnlücke (36) auf der Symmetrieachse (300) angeordnet ist, und zu beiden Seiten jeweils vier Zähne (35) vorgesehen sind, wobei die kürzesten Zähne (35) etwa die 0,5fache Länge der längsten Zähne (35) aufweisen.

3. Wassermisch- und Absperrventil nach Anspruch 1 oder 2, **dadurch gekennzeichnet, daß** die der Symmetrieachse (300) am nächsten gelegenen Zähne (35) etwa 1 mm lang sind, wobei die Breite (413) der ringausschnittförmigen Einlaßöffnungen (41) bei einem Radius (412) der Innenkante (411) von 6,6 mm etwa 3,4 mm beträgt.

4. Wassermisch- und Absperrventil nach wenigstens einem der Ansprüche 1 bis 3, **dadurch gekennzeichnet, daß** der Kreisbogen der Steuerkante (31) einen Radius (32) von etwa 5,6 mm aufweist, wobei der Radius (33), der die Zahnspitzen berührt, etwa 5,3 mm beträgt.

5. Wassermisch- und Absperrventil nach wenigstens einem der Ansprüche 1 bis 4, **dadurch gekennzeichnet, daß** der Keilwinkel (361) der Zahnlücken (36) etwa 6,1° und der Keilwinkel (351) der Zähne (35) etwa 23,1° beträgt.

6. Wassermisch- und Absperrventil nach wenigstens einem der Ansprüche 1 bis 5, **dadurch gekennzeichnet, daß** die Zähne (35) jeweils einen Zahnfuß mit einer Dicke von etwa 1 mm aufweisen, wobei die Kanten der Zahnflanken am Zahnfuß und am Zahnkopf mit einem Radius von 0,1 mm bis 0,3 mm , vorzugsweise mit einem Radius von 0,2 mm , verrundet sind.

7. Wassermisch- und Absperrventil nach wenigstens einem der Ansprüche 1 bis 6, **dadurch gekennzeichnet, daß** die Abdeckscheibe (2) im Bereich des Überströmkanals (23) am Boden (21) ein Siebgeflecht (20) trägt.

8. Wassermisch- und Absperrventil nach Anspruch 7, dadurch das Siebgeflecht (20) aus Draht mit kreisförmigem Querschnitt mit einem Durchmesser von etwa 0,3 mm sowie mit einer Maschenweite von etwa 0,5 mm hergestellt ist.

9. Wassermisch- und Absperrventil nach Anspruch 8, **dadurch gekennzeichnet, daß** der Draht aus Kunststoff oder Metall hergestellt ist.

10. Wassermisch- und Absperrventil nach einem der Ansprüche 7 bis 9, **dadurch gekennzeichnet, daß** das Siebgeflecht (20) reibschlüssig im Bodenbereich der Abdeckscheibe (2) gehalten ist.

11. Wassermisch- und Absperrventil nach wenigstens einem der Ansprüche 1 bis 6, **dadurch gekennzeichnet, daß** in dem Boden (21) der Abdeckscheibe (2) eine reliefartige Stuktur eingeformt ist, die etwa der der Anströmseite des in einem der Ansprüche 7 bis 10 angegebenen Siebgeflechts entspricht.

## Claims

1. Sanitary water-mixing and shut-off valve having a fixed disc (4), which has at least one cold and hot water inlet hole (41) in the shape of a sector of an annulus, and having a control disc (3) arranged to move with respect to the fixed disc (4), which control disc (3) has at least one flow-over hole in the form of a through-gap (30) and, on its end face remote from the fixed disc (4), is bounded by a cover disc (2) having a recess as a flow-over channel (23), wherein in the through-gap (30) the control edge (31) which co-operates with the inlet holes of the fixed disc (4) has a toothed arrangement for reducing flow noise, **characterised in that** the control edge (31) is in the form of an arc of a circle of at least 180°, the radius (32) of which is smaller than the radius (412) of the inner edge (411) of the inlet holes (41), and the teeth (35) are formed like teeth on an internally toothed wheel, the teeth (35) being increasingly shortened on each side of an axis of symmetry (300) as the distance therefrom increases.

2. Water-mixing and shut-off valve according to claim 1, **characterised in that** a gap (36) between teeth is arranged on the axis of symmetry (300), and to each side there are provided four teeth (35), the shortest teeth (35) being about 0.5 times the length of the longest teeth (35).

3. Water-mixing and shut-off valve according to claim 1 or 2, **characterised in that** the teeth (35) closest to the axis of symmetry (300) are about 1 mm long, the width (413) of the inlet holes (41) - which are in the shape of sectors of an annulus - being about 3.4 mm for an inner edge (411) having a radius (412) of 6.6 mm.

4. Water-mixing and shut-off valve according to at least one of claims 1 to 3, **characterised in that** the arc of the circle of the control edge (31) has a radius (32) of about 5.6 mm, the radius (33) that touches the tips of the teeth being about 5.3 mm.

5. Water-mixing and shut-off valve according to at least one of claims 1 to 4, **characterised in that** the angle of taper (361) of the gaps (36) between the teeth is about 6.1° and the angle of taper (351) of the teeth (35) is about 23,1°.

6. Water-mixing and shut-off valve according to at least one of claims 1 to 5, **characterised in that**, in each case, the teeth (35) have a base about 1 mm thick, the edges of the tooth flanks being rounded at the base and the tip of the tooth with a radius of from 0.1 mm to 0.3 mm, preferably with a radius of 0.2 mm.

7. Water-mixing and shut-off valve according to at least one of claims 1 to 6, **characterised in that** the cover disc (2) carries, at the bottom (21) in the region of the flow-over channel (23), a woven sieve mesh (20).

8. Water-mixing and shut-off valve according to claim 7, **characterised in that** the woven sieve mesh (20) is manufactured from wire of circular cross-section having a diameter of about 0.3 mm and a mesh size of about 0.5 mm.

9. Water-mixing and shut-off valve according to claim 8, **characterised in that** the wire is made from plastics material or metal.

10. Water-mixing and shut-off valve according to one of claims 7 to 9, **characterised in that** the woven sieve mesh (20) is held in the region of the bottom of the cover disc (2) by frictional engagement.

11. Water-mixing and shut-off valve according to at least one of claims 1 to 6, **characterised in that**, in the bottom (21) of the cover disc (2), there is formed a relief-like structure, which corresponds approximately to the flow side of the woven sieve mesh referred to in one of claims 7 to 10.

## Revendications

1. Soupape de mélange et de coupure d'eau sanitaire comprenant :
- un disque fixe (4) comportant au moins une ouverture d'entrée (41) d'eau chaude et d'eau froide en forme de découpes annulaires,
- un disque de commande (3) mobile par rapport au disque fixe (4) et présentant au moins une ouverture de débordement ayant la forme d'un passage (30), ce disque étant limité sur sa face frontale éloignée du disque fixe (4) par un disque de couverture (2) présentant une cavité servant de canal de débordement (23), tandis que le bord de commande (31) du passage (30) coopérant avec les ouvertures d'entrée du disque fixe (4) porte une denture pour diminuer le bruit d'écoulement de l'eau,
**caractérisée en ce que**
le bord de commande (31) est constitué par un arc de cercle d'au moins 180°, dont le rayon (32) est inférieur au rayon (412) du bord intérieur (411) des ouvertures d'entrée (41), et les dents (35), qui sont analogues à celles d'un pignon denté, sont disposées de part et d'autre d'un axe de symétrie (300) avec un espacement entre elles qui croît en même temps que la hauteur des dents diminue.

2. Soupape selon la revendication 1,
**caractérisée en ce qu'**
un creux de dent (36) se trouve sur l'axe de symétrie (300) et de chaque côté de celui-ci se trouvent quatre dents (35) dont les plus courtes ont une longueur qui est environ la moitié de celle des plus longues.

3. Soupape selon la revendication 1 ou 2,
**caractérisée en ce que**
les dents (35) les plus proches de l'axe de symétrie (300) ont une longueur d'environ 1 mm et les ouvertures d'entrée (41) en forme d'anneau présentent avec un rayon (412) de leur bord interne (411) égal à 6,6 mm, une largeur (413) d'environ 3,4 mm.

4. Soupape selon au moins une des revendications 1 à 3,
**caractérisée en ce que**
l'arc de cercle du bord de commande (31) a un rayon (32) d'environ 5,6 mm tandis que le rayon (33) correspondant aux bouts des dents, est d'environ 5,3 mm.

5. Soupape selon l'une quelconque des revendications 1 à 4,
**caractérisée en ce que**
l'angle (361) que font entre eux les flancs des creux de dents (36) est d'environ 6,1°, tandis que l'angle (351) que font les flancs des dents (35) est d'environ 23,1°.

6. Soupape selon l'une quelconque des revendications 1 à 5,
**caractérisée en ce que**
les dents (35) ont chacune un pied d'une épaisseur de 1 mm environ, et les bords des flancs des dents au pied et à la tête présentent des arrondis dont le rayon est de 0,1 à 0,3 mm, de préférence 0,2 mm.

7. Soupape selon l'une quelconque des revendications 1 à 6,
**caractérisée en ce que**
le disque de couverture (2), dans la zone du canal de débordement (23), porte sur son fond (21) une toile de tamisage (20).

8. Soupape selon la revendication 7,
**caractérisée en ce que**
la toile de tamisage (20) est faite d'un fil de section circulaire dont le diamètre est d'environ 0,3 mm, avec des mailles d'une largeur d'environ 0,5 mm.

9. Soupape selon la revendication 8,
**caractérisée en ce que**
le fil est en matière plastique ou en métal.

10. Soupape selon l'une quelconque des revendications 7 à 9,
**caractérisée en ce que**
la toile de tamisage (20) est maintenue par friction sur le fond du disque de couverture (2).

11. Soupape selon l'une quelconque des revendications 1 à 6,
**caractérisée en ce que**
sur le fond (21) du disque de couverture (2) est moulée une structure en relief qui correspond à peu près à la face d'entrée d'eau de la toile de tamisage indiquée aux revendications 7 à 10.
